# EUROPEAN PATENT APPLICATION

(11) **EP 4 617 388 A1**
(43) Date of publication of application: **17.09.2025**
(21) Application number: 23888875.4
(22) Date of filing: 18.08.2023
(51) Int. Cl.: C22B 7/00, C22B 26/12

(54) **LITHIUM RECOVERY METHOD**

(30) Priority: 10.11.2022 KR 20220149284
(71) Applicant: Young Poong Corporation, Seoul 06110 (KR)
(72) Inventor: MOON, Nam Il, Ulju-gun, Ulsan 44920 (KR); LEE, Ho Jo, Gunsan-si, Jeollabuk-do 54096 (KR); KIM, Eung Bae, Bonghwa-gun, Gyeongsangbuk-do 36272 (KR); YOO, Su Hwan, Seoul 05003 (KR)
(74) Representative: Habermann, Hruschka & Schnabel
(86) International application number: PCT/KR2023/012262
(87) International publication number: WO 2024/101608

(57) **Abstract**

The present invention relates to a method for efficiently recovering valuable metals from end-of-life waste batteries in a dry smelting manner and, more specifically, to a lithium recovery method wherein a flux and a sulfur component are mixed with pulverized or smashed waste lithium battery cells, followed by melting at a high temperature of 1400°C or higher, and then a lithium-sulfur compound (Li2S) volatilized therefrom is obtained.

## Description

### Technical Field

The present disclosure relates to a method for efficiently recovering valuable metals from end-of-life waste lithium batteries in a dry smelting manner and, more particularly, to a lithium recovery method wherein a flux and a sulfur component are mixed with pulverized or smashed waste lithium battery cells, followed by melting at a high temperature of 1400°C or higher, and then a lithium-sulfur compound (Li2S) volatilized therefrom is obtained.

### Background Art

Waste batteries are created because primary batteries or secondary batteries, which are used daily as power of various electronic devices such as mobile phones, laptop computers, cassette toys, and emergency powers, reach the end of their lifespan.

These waste batteries contain hazardous metals such as lead, cadmium, and mercury, and KOH, NH4Cl, lithium salt, H2SO4 and organic solutions are used as electrolytes; so, the impact on the environment may not be ignored. In addition, since these batteries contain valuable metals such as silver, cobalt, nickel, zinc, manganese, and lithium, recycling of waste batteries has been required to protect environment and efficiently use limited resources.

Particularly, demand for lithium-ion batteries (LiB) has been increasing along with the portable electronic device market since the 1990s, and demand has recently increased further worldwide due to rapid expansion of the electric vehicle market.

Accordingly, the demand will much exceed the volume of lithium supplied from the natural resources in the near future, which may bring instability to a lithium resource supply. Further, waste batteries which are continuously accumulated could also yield environmentally big problems.

To solve these problems, it is very important to recycle used lithium secondary batteries. That is, if usable materials may be recovered from the waste batteries, it may be possible to extract fewer raw materials from the limited sources of supply underground. In addition, if waste LiB may be recycled, serious negative environmental impacts caused by mining and processing ores could be avoided.

Methods for recovering valuable metals contained in waste batteries include hydrometallurgy and pyrometallurgy.

Hydrometallurgy includes pretreatment followed by leaching and selective precipitation for recovering cathode materials, and additional purification and recovery techniques such as solvent extraction for exchanging ions and extracting valuable metals (*see* KR 10-2019-0084081). Some hydrometallurgy processes have shortcomings of relatively long leaching time and low leaching efficiency rates due to strong binding force of high valance state of positive electrode active material and organic binder. In addition, the extensive use of highly concentrated acidic solutions and reduction agents and the complex processes generate huge wastewater, which may cause secondary pollution due to emission of wastewater and hazardous gas during the leaching process. Particularly, lithium may be dispersed during this separation and purification processes, which may lead to low lithium recovery rates.

In order to overcome these shortcomings and extract and purify metals, a pyrometallurgy method may be used (*see* KR 10-2021-0094615, KR 10-2313417, KR 10-0717389, and KR 10-2015-0096849). The pyrometallurgy recycling process has advantages of reducing processing and process costs because massive processing is possible due to fast chemical reactions. In addition, supply materials are relatively flexible, and processes are simple, and the impact of dross on the environment is also in a minor level. Since mixed waste batteries are directly charged into a melting furnace for processing without going through a classification process, it may particularly be possible to solve problems of fire and explosion danger during the processing of lithium batteries, and there is no consideration of setting an inert atmosphere of smashing process during wet processes.

However, the degree of purity of the recovered metals is low, and there is a limitation in recovering high value-added metal powders. In addition, there is a shortcoming that exhaust gas generated during processes needs to be processed. In particular, since lithium is absorbed into slags, there is also a problem that an additional process is needed to make use of lithium.

Moreover, most research results on lithium-based battery recycling are focused on separation and recovering of Co and Ni, and, currently, meager for Li.

Therefore, it is important to develop a revolutionary recycling process in order to more efficiently extract and separate lithium among valuable metals from waste batteries containing a high rate of heavy metals and toxic electrolytes.

### Disclosure

### Technical Problem

The present disclosure has been devised to obviate the above limitation. An aspect of the present disclosure is directed to providing a method in which processes are simple and environment friendly, the processing speed is fast, and lithium is efficiently recovered from a process side compared to the conventional method by applying a dry smelting manner in recycling the waste lithium batteries.

### Technical Solution

To solve the above problems, a method of recovering lithium from a waste lithium battery of an embodiment of the present disclosure includes: preprocessing of pulverizing or smashing a waste lithium battery cell; mixing a flux and a sulfur component with the preprocessed waste lithium battery cell; charging the mixture into a heating furnace and melting at a high temperature of 1400°C or higher; and obtaining a lithium-sulfur compound volatilized from the molten slag in the form of a dust by air cooling.

The waste lithium battery cell includes any one of a cell, a cell pack, an assembly or a scrap thereof.

The flux includes at least any one of SiO2, CaO, FeO, MnO and Al2O3.

The sulfur component includes any one of a sulfur, a sulfur ion, a sulfur compound, a sulfate salt, and a sulfur mixture.

The melting is performed at a temperature of 1400°C to 1800°C.

The lithium-sulfur compound may be Li2S.

The sulfur component may not be mixed with a flux but also added at the melting.

An apparatus for recovering lithium from the waste lithium battery is provided according to the lithium recovery method.

A lithium-sulfur compound for an all solid-state battery is provided according to the lithium recovery method.

### Advantageous Effects

As described above, since waste lithium batteries that are directly smashed and broken into pieces at a cell, a pack, and a module level from an exemplary embodiment of the present disclosure are used, there is an effect of reducing time and cost for preprocessing processes. In addition, since the mixed waste batteries are directly charged into a melting furnace for processing without classification process, it can possibly solve the problems of fire and explosion danger during processing the lithium batteries.

In addition, since an exemplary embodiment of the present disclosure makes use of a pyrometallurgy recycling process, there are advantages in that there is no emission of wastewater and environmental pollution, and massive processing is possible by fast chemical reactions to reduce processing and process costs.

In addition, from an exemplary embodiment of the present disclosure, more than 90% of lithium can be extracted, which is difficult to recover using the conventional wet manner.

### Description of Drawings

FIG. 1 is a flow chart in which the lithium recovery method is described step by step according to an exemplary embodiment of the present disclosure.
FIG. 2 is a flow chart in which the lithium recovery method is described step by step according to another exemplary embodiment of the present disclosure.

### Mode for Disclosure

Hereinafter, the present disclosure will be described in detail.

All terms and words used in the present specification and claims should not be interpreted as limited to their usual or dictionary meanings, but they should be interpreted as meanings and concepts which conform with the technical ideas of the present disclosure based on the principle that the inventors may suitably define the concept of the terms in order to explain his or her own invention in the best way.

An exemplary embodiment of the present disclosure relates to a method of efficiently recovering valuable metals from end-of-life waste lithium batteries by a pyrometallurgy method.

The term "lithium batteries" used herein is used with the meaning containing all primary batteries, secondary batteries, or all solid-state batteries which contain lithium. The batteries that reached the end of lifespan or are discarded after use are collectively called "waste lithium batteries".

Generally, primary batteries, unlike secondary batteries, may not be electrically recharged once used and are discarded. A secondary battery is an energy saving apparatus which may repeatedly charge/discharge approximately over 500 times, and a battery that may convert chemical energy into electrical energy, and vice versa. Representative examples thereof include lithium-ion batteries, lithium polymer batteries, nickel cadmium batteries, nickel hydrogen batteries, etc. Among them, lithium-ion batteries have much better energy storage capacity and lifespan compared to other secondary batteries.

In addition, whereas a lithium-ion battery is configured with a positive electrode, a negative electrode, a separation film, and an electrolyte, an all solid-state battery is a battery of which electrolyte is not in a liquid state but in a solid state. Therefore, since all solid-state batteries do not require a safety apparatus or a separation film for preparing for temperature changes and external shocks, it is possible to reduce cost and implement high capacity with the same size, and there is an advantage of being free from fire danger.

As key materials used at a positive electrode of a lithium-ion battery, LCO (LiCoO2), NCM (Li[Ni, Co, Mn]O2), NCA (Li[Ni, Co, Al]02), LMO (LiMn2O4) and LFP (LiFePO4) are used depending on components of metal salts. In addition, at a negative electrode, carbonaceous material such as graphite or copper may be used.

From an exemplary embodiment of the present disclosure, since a large number of valuable metals such as cobalt, copper, aluminum, steel, and lithium are contained among the above component materials, a dry smelting manner is used among one of the high temperature heat processing methods so as to efficiently recover the valuable metals as economically valuable waste resources.

The term "smelting" generally means a manner where ore is broken down using heat and a chemical reduction agent to allow metals to remain after driving out other elements into gas or slag. At this time, the reduction agent is generally a source of carbon such as coke or early charcoal. Carbon removes oxygen from ore to remain atom elements. Therefore carbon (C) is oxidated to produce carbon dioxide. Since most ores are impurities, the rock accompanied using flux such as limestone need to be removed as slags.

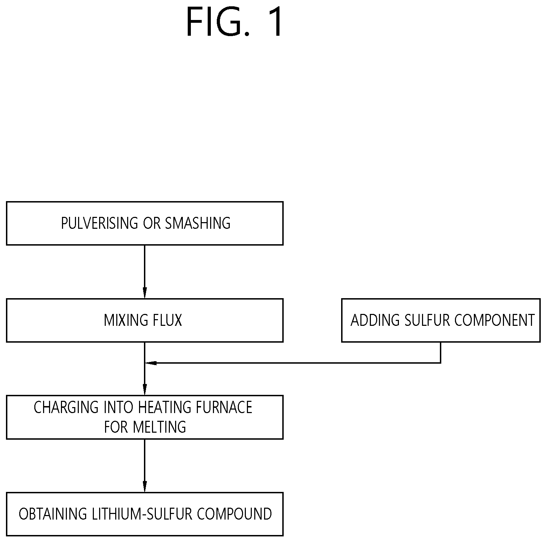

FIG. 1 is a flow chart in which the lithium recovery method is described step by step according to an exemplary embodiment of the present disclosure. In order to recover lithium from a waste lithium battery, an exemplary embodiment of the present disclosure includes: preprocessing of pulverizing or smashing a waste lithium battery cell; mixing a flux and a sulfur component (S) with the preprocessed waste lithium battery cell; charging the mixture into a heating furnace and melting the same at a high temperature of 1400°C or higher; and obtaining a lithium-sulfur compound volatilized from the molten slag in the form of a dust by air cooling. In summary, an exemplary embodiment of the present disclosure relates to a method of recovering lithium as lithium-sulfur compounds from a waste lithium battery cell. The lithium-sulfur compounds may be Li2S.

That is, most lithium is volatized into gas and then obtained in the form of a dust by air cooling when sulfur component is added at the mixing to generate Li2S from the molten slag according to the chemical reaction formula below.

<Chemical reaction formula> Li2O + S + CO(g) -> Li2S + CO2(g)

In this formula, since the Gibbs free energy, △G < 0, it is a spontaneous reaction, and as the temperature increases, it reacts with S to generate volatile Li2S. Li2S has the boiling point of 1372°C, the vapor pressure thereof is approximately 1 atm at 1400 °C, and Li2S is volatilized from 1400 °C or below.

Here, when the melting temperature is too high, since the performance of removing impurities such as aluminum deteriorates, the melting temperature is preferably in the range of 1400°C to 1800°C, and the melting time is also preferably maintained at the melting temperature for 1 hour or more.

Here, it is necessary to block oxygen during temperature rise, or to inject an inert gas such as N2 or Ar to prevent oxidation of sulfur component (S).

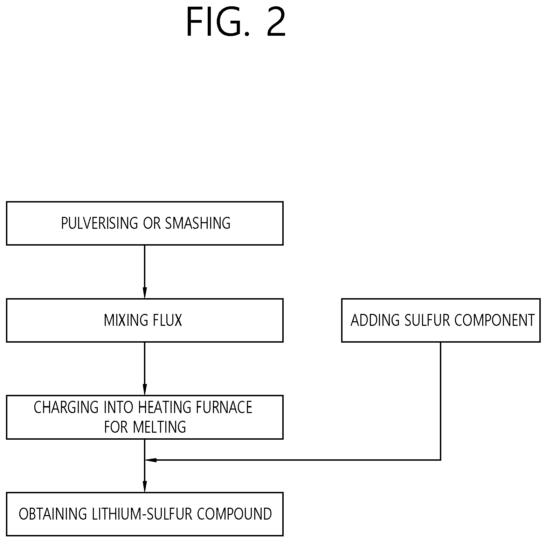

As another exemplary embodiment of the present disclosure, the sulfur component is not mixed with a flux but added during the mixing step after the preprocessing step, but may be also added into liquid slug separately during the melting step (*see* FIG. 2).

Here, the amount of sulfur component added may be used based on stoichiometry for lithium in the slug. That is, 0.5 times to 10 times of equivalent weight of lithium may be mixed, and 2 times to 4 times is preferable, but not limited thereto.

The sulfur component mentioned above may include not only a sulfur, a sulfur ion, a sulfur compound, a sulfate salt, and a sulfur mixture, but also all sulfur compounds and mixtures which contain sulfur. As examples of a sulfur compound, there are hydrogen sulfide, sulfur dioxide, sodium sulfide, copper sulfide, and nickel sulfide. In addition, as a sulfate salt, there are copper sulfate, manganese sulfate, nickel sulfate, cobalt sulfate, magnesium sulfate, calcium sulfate, etc., but not limited thereto.

Particularly, a sulfur compound is preferable as sulfur component, and the sulfur compound may be broken down into sulfur in the melting process.

The waste lithium battery cell may be a cell, a cell pack, an assembly, or a scrap thereof.

The flux of an exemplary embodiment of the present disclosure may include at least any one of SiO2, CaO, FeO, MnO and Al2O3, which is charged into a refining furnace in fine particle form or powder form. The composition ratio of the components may vary considering melting points, etc., and additional components may be also used as needed.

It is preferable to use CaO-based flux which has high removing efficiency for aluminum that is an impurity contained in large amounts in waste lithium battery, and contains all SiO2, MnO, Al2O3, etc. that have enough viscosity at melting temperature.

The amount of flux may vary according to the type of waste battery cells, but be used 0.5 times to 10 times of the weight of the waste battery cell, and preferably 2 times to 5 times.

In conclusion, by controlling the amount of sulfur component and flux content from the above chemical reaction formula as well as the ratio of carbon as a reduction agent, a lithium-sulfur compound (Li2S) required for recovering waste lithium is obtained.

Li2S vaporized into gas after generation may be separated or collected using scrubber, backhouse filter, electric dust collector, cyclone, etc.

### <Exemplary Embodiment 1>

1 kg of waste lithium battery cells that have reached the end of lifespan are pulverized into a size that is easy to charge. The pulverized waste lithium battery cells are charged into a heating furnace together with 2 kg of CaO-based flux which contains SiO2, MnO, and Al2O3. At this time, sulfur is directly inserted as a sulfur component and mixed together, then the mixture is heated to a temperature of up to 1500°C at a heating rate of 5°C/min or higher in an Ar atmosphere, then small amounts of oxygen are added to melt in an area with low oxygen partial pressure, and the mixture is maintained in an Ar atmosphere for 1 hour to 3 hours to allow the generated Li2S to volatilize. Thereafter, it is air cooled and obtained in the form of a dust.

### <Exemplary Embodiment 2>

At the mixing of sulfur, sulfur was not directly added but added separately after melting and heated to melt. The others were conducted in the same manner as Exemplary Embodiment 1.

### <Exemplary Embodiment 3>

Sodium sulfide was used instead of sulfur. The others were conducted in the same manner as Exemplary Embodiment 1.

It was confirmed that these methods were very suitable for recovering lithium from waste lithium batteries with a high recovery rate of 90% or more.

Solid electrolyte is characteristically used for all solid-state batteries of which density and stability are improved compared to lithium-ion batteries, and since Li2S is a core material of the solid electrolyte, the Li2S obtained according to an exemplary embodiment of the present disclosure may be recycled as a raw material for all solid-state batteries.

## Claims

1. A method of recovering lithium from a waste lithium battery, the method comprising:
preprocessing of pulverizing or smashing a waste lithium battery cell;
mixing a flux and a sulfur component with the preprocessed waste lithium battery cell;
charging the mixture into a heating furnace and melting the same at a high temperature of 1400°C or higher; and
obtaining a lithium-sulfur compound volatilized from the molten slag in the form of a dust by air cooling.

2. The method of claim 1, wherein the waste lithium battery cell includes any one of a cell, a cell pack, an assembly or a scrap thereof.

3. The method of claim 1, wherein the flux includes at least any one of SiO2, CaO, FeO, MnO and Al2O3.

4. The method of claim 1, wherein the sulfur component includes any one of a sulfur, a sulfur ion, a sulfur compound, a sulfate salt and a sulfur mixture.

5. The method of claim 1, wherein the melting is performed at a temperature of 1400°C to 1800°C.

6. The method of claim 1, wherein the lithium-sulfur mixture is Li2S.

7. The method of claim 1, wherein the sulfur component is not mixed with the flux but added at the melting.

8. An apparatus for recovering lithium from a waste lithium battery according to the method of recovering the lithium of any one of claims 1 to 7.

9. A lithium-sulfur compound for an all solid-state battery according to any one of claims 1 to 7.
